Europäisches Patentamt

European Patent Office

Office européen des brevets

(11) Veröffentlichungsnummer: **0 216 307**

**A2**

# (12) EUROPÄISCHE PATENTANMELDUNG

(21) Anmeldenummer: 86112862.7

(22) Anmeldetag: 17.09.86

(51) Int. Cl.⁴: **G02B 6/38**

(30) Priorität: 26.09.85 DE 3534373

(43) Veröffentlichungstag der Anmeldung:
01.04.87 Patentblatt 87/14

(84) Benannte Vertragsstaaten:
CH DE FR GB IT LI NL SE

(71) Anmelder: **Siemens Aktiengesellschaft Berlin und München**
**Wittelsbacherplatz 2**
**D-8000 München 2(DE)**

(72) Erfinder: **Mayerhofer, Franz, Dipl.-Ing. (FH)**
**Primelstrasse 34**
**D-8039 Puchheim(DE)**

(54) **Mechanische Vorrichtung zum Aufeinandereinjustieren der Enden zweier optischer Faserendabschnitte.**

(57) Mechanische Vorrichtung zum Aufeinandereinjustieren der Enden (51, 81) zweier optischer Faserendabschnitte (5, 8) von Monomodefasern. Bei einer derartigen Vorrichtung soll eine hohe Langzeitstabilität erreicht werden. Dazu besteht die Vorrichtung im wesentlichen aus zwei Faserhalterungen (62, 63), die auf zwei identischen Verstelleinheiten (20, 30) fixiert sind, mit denen diese Faserhalterungen senkrecht zur Längsrichtung der Endabschnitte und senkrecht zueinander verstellbar sind. Eine Faserhalterung (62) ist so ausgebildet, daß in ihr der Endabschnitt in der Längsrichtung verschiebbar ist. Die Vorrichtung weist ein gutes Temperaturverhalten auf, insbesondere wenn sie aus Invar -Stahl gefertigt ist. Sie ist kompakt, niedrig und starr ausführbar.

FIG 2

EP 0 216 307 A2

## Mechanische Vorrichtung zum Aufeinandereinjustieren der Enden zweier optischer Faserendabschnitte

Die vorliegende Erfindung betrifft eine mechanische Vorrichtung zum Aufeinandereinjustieren der Enden zweier optischer Faserendabschnitte, insbesondere von Monomodefasern, nach dem Oberbegriff des Patentanspruchs 1.

Beispielsweise ist bei einer derartigen Vorrichtung eine Faserhalterung in der Längsrichtung und die andere Faserhalterung in den zwei Querrichtungen der Endabschnitte verstellbar. In der Regel werden mehrere linear bewegliche Verstelleinheiten verwendet. Meist handelt es sich um Tische mit Kugelgeradführungen und Mikrometerstellschrauben. Durch das Zusammenfügen einzelner Komponenten zu einer Verstelleinheit wird dies häufig zu groß. Einfache Verstelltische haben außerdem weder eine für Monomodetechnik erforderliche Auflösung von 0,1 µm, noch eine ausreichende Langzeitkonstanz.

Hochgenaue Mikropositioniertische mit Kugelführungen sind sehr teuer und die Langzeitstabilität ist trotzdem meist nicht genügend gewährleistet. Mikropositioniersysteme mit Piezokeramik sind zwar sehr fein einstellbar, reagieren aber besonders kritisch auf Temperaturänderungen.

Aufgabe der vorliegenden Erfindung ist es, eine relativ einfache und billige Vorrichtung zum Aufeinandereinjustieren der Enden zweier optischer Faserendabschnitte anzugeben, die eine hohe Langzeitkonstanz der Justierung bietet.

Diese Aufgabe wird ausgehend von einer Vorrichtung der eingangs genannten Art gemäß dem kennzeichnenden Teil des Patentanspruchs 1 dadurch gelöst,

-daß die beiden Verstelleinrichtungen (20, 30) gleich ausgebildet und relativ zueinander so angeordnet sind, daß ihre Verstellrichtungen (x-, y-Richtung) quer zur Längsachse (z-Richtung) und quer zueinander gerichtet sind, und

-daß zumindest eine Faserhalterung (62) so ausgebildet ist, daß der in ihr gehaltene Endabschnitt (5) in der Längsrichtung (z-Richtung) zumindest zeitweilig verschiebbar ist.

Die erfinderische Lösung beruht auf dem Grundgedanken, daß senkrecht zu den Endabschnitten nur sehr kleine Toleranzen zulässig sind, während in Längsrichtung der Endabschnitte die Anforderungen weniger streng sind. Damit die Schwankungen der Leistung in der Monomodefaser beispielsweise durch die Justierung einer Faserendflächenkopplung kleiner als 5 % vom Maximalwert bleiben, müssen diese Fasern in radialer Richtung typisch um ± 1µm zueinander stabil gehalten werden.

Durch die Verwendung der gleichen Justiereinheiten für die zwei Richtungen quer zur Längsrichtung ergibt sich ein sehr niedriger Aufbau und eine gute Zugänglichkeit der Faserhalterungen. Die weniger kritische Justierung in der Längsrichtung wird durch die Verschiebemöglichkeit in einer der beiden Justiereinheiten ermöglicht.

Für die Justierung in Längsrichtung kann eine einfache herkömmliche Justiereinheit verwendet werden. Dadurch, daß die Justiereinheiten für die drei verschiedenen Richtungen voneinander getrennt montiert sind, wird eine niedrige kompakte Bauhöhe und damit eine hohe Stabilität und ein sehr starrer Aufbau erreicht.

Die ganze Vorrichtung kann zur Herstellung von Spleißen zwischen Monomodefasern mit hoher Langzeitkonstanz verwendet werden, insbesondere für Laboraufbauten.

Eine vorteilhafte Ausgestaltung der erfindungsgemäßen Kopplung ist gemäß Anspruch 2 so ausgebildet, daß jede der beiden Verstelleinheiten jeweils aus einem fixierbaren Grundkörper und einem daran angelenkten, durch eine Stellschraube um eine in Längsrichtung der Endabschnitte ausgerichtete Drehachse verdrehbaren Hebelarm besteht, auf dem im Abstand von der Drehachse die zugeordnete Faserhalterung angeordnet ist.

Besonders vorteilhaft ist es dabei, wenn gemäß Anspruch 3 der Hebelarm durch eine die Drehachse definierende Federzone an den Grundkörper angelenkt ist. Die Federzone, bei der die elastische Verformung des Materials ausgenützt wird, bildet ein spielfreies Gelenk oder Lager. Dabei ist es besonders zweckmäßig, wenn gemäß Anspruch 4 der Hebelarm, die Federzone und der Grundkörper zusammen aus einem Stück bestehen.

Gemäß einer vorteilhaften Ausgestaltung einer derartigen Vorrichtung besteht nach Anspruch 5 das eine Stück aus einem Stück Profilstab, in dessen Profil der Hebelarm vom Grundkörper durch einen Schlitz getrennt ist, der in eine an die Federzone grenzende Erweiterung mündet, wobei die Federzone durch einen den Hebelarm mit dem Grundkörper verbindenden elastischen Steg gebildet ist.

Dieser elastische Steg ist vorzugsweise nach Anspruch 6 durch eine zwischen der Erweiterung und einer ein federzonenseitige Ende des Hebelarms definierenden rinnenförmigen Vertiefung in der Oberfläche des Profilstabs angeordnete Trennwand gebildet.

Die Stellschraube weist vorzugsweise nach Anspruch 7 ein Feingewinde auf und vorteilhafterweise ist sie gemäß Anspruch 8 in einer Gewindebuchse gelagert, die mit dem Grundkörper fest verschraubt ist.

Die Stellschraube greift vorzugsweise nach Anspruch 9 an dem von der Drehachse fernen Ende des Hebelarms an, vorzugsweise gemäß Anspruch 10 an einem am Hebelarm angebrachten Anschlag.

Die Stellschraube ist vorzugsweise gemäß Anspruch 11 durch eine Klemmvorrichtung gegen Verdrehen gesichert.

Vorteilhafterweise ist gemäß Anspruch 12 ein am Stellschraubenumfang klemmbarer Verstellhebel vorgesehen, der auch als Drehwegbegrenzer dienen und durch einen oder mehrere feste Wegbegrenzer ersetzt werden kann.

Für eine rechnergesteuerte Justierung in den beiden Querrichtungen ist es vorteilhaft, wenn gemäß Anspruch 13 die Stellschrauben der anderen und weiteren Justiereinheit motorbetriebene Stellschrauben sind.

Zur Erhöhung des Drucks auf eine Stellschraube und zur Verringerung von Schwankungen der Federkraft im Verstellbereich ist es vorteilhaft, gemäß Anspruch 14 die Federkraft der Federzone durch zumindest eine zusätzliche Feder zu verstärken.

Eine Faserhalterung, insbesondere jede Faserhalterung, ist vorzugsweise nach Anspruch 15 aus einer Nut zur Aufnahme eines Faserendeabschnitts und einer Klemmvorrichtung zum Festklemmen des Endabschnitts in der Nut gebildet. Die Nut kann gemäß Anspruch 16 in einem Siliziumplättchen ausgebildet sein, das auf der zugeordneten Verstelleinheit fixiert ist. Vorteilhaft ist es aber auch, gemäß Anspruch 17 die Nut direkt in die Oberfläche der zugeordneten Verstelleinheit einzubringen. Dadurch kann eine Klebeverbindung zwischen dem Siliziumplättchen und der zugeordneten Justiereinheit vermieden werden.

In jedem Fall besteht bei einer Faserhalterung mit Nut und Klemmvorrichtung diese vorzugsweise gemäß Anspruch 18 aus einer magnetischen Klemmvorrichtung.

Besonders zweckmäßig ist es bei einer derartigen Vorrichtung, wenn gemäß Anspruch 19 die Drehachse und die Nut der beiden Verstelleinheiten auf einer im Winkel von 45° zu einer Basisfläche des Grundkörpers geneigten Geraden angeordnet sind. In diesem Fall können diese beiden Verstelleinheiten identisch, beispielsweise vom selben Profilstab abgetrennt sein. Beide Verstelleinheiten sind dann mit auf gleicher Seite liegender Basisfläche so anzuordnen, daß die eine gegenüber der anderen um 180° verdreht ist. Die im Winkel von 45° zu den Basisflächen ausgerichteten Verstellrichtungen beider Justiereinheiten kreuzen sich dann senkrecht.

Zur Erzielung einer hohen Präzision ist es wichtig, daß gemäß Anspruch 20 die beiden Verstelleinheiten starr miteinander verbunden sind. Vorzugsweise wird die starre Verbindung durch Stiften und Verschrauben hergestellt. Sie kann auch durch Schweißen oder Löten hergestellt werden. Diese Verbindungsarten sind billig.

Zur Erzielung einer besonders hohen Präzision ist es zweckmäßig, wenn gemäß Anspruch 21 die beiden Verstelleinheiten aus einem monolithischen Block gefertigt sind.

Vorzugsweise sind bei einer erfindungsgemäßen Vorrichtung nach Anspruch 22 die andere und weitere Verstelleinheit auf einem Unterteil einer Schlittenführung fixiert.

Bevorzugterweise ist gemäß Anspruch 23 eine weitere Faserhalterung zum Haltern des in der einen Faserhalterung gehalterten Endabschnitts vorgesehen, die durch eine weitere Verstelleinheit in Längsrichtung verstellbar ist.

Dabei ist es zweckmäßig, wenn gemäß Anspruch 24 die weitere Verstelleinheit zur Justierung in der Längsrichtung als eine Schlittenführung mit einem fixierten Unterteil und einem linear beweglichen, mit einem Feintrieb verstellbaren Oberteil ausgebildet ist, auf dem die eine Faserhalterung angeordnet ist.

Bei einer bevorzugten Ausgestaltung dieser Vorrichtung sind nach Anspruch 25 das Unterteil der weiteren Verstelleinheit und das Unterteil der beiden anderen Verstelleinheiten auf einer gemeinsamen Montageplatte fixierbar.

Bei einer bevorzugten Ausgestaltung einer derartigen Vorrichtung sind nach Anspruch 26 die weitere Verstelleinheit und die beiden anderen Verstelleinheiten auf zwei gleichen Unterteilen befestigbar. Hier kann die als Schlittenführung ausgebildete weitere Verstelleinheit, deren bewegliches Oberteil als Schlepptisch für das Ende des einen Faserendabschnitts zur Einstellung des Abstandes zwischen den Enden dieser Endabschnitte verwendet wird, nach der Spleißjustierung, nach der er nicht mehr benötigt wird, entfernt werden und kann so für mehrere erfindungsgemäße Vorrichtungen dienen.

Soll jedoch den beiden Verstelleinheiten die weitere Verstelleinheit fest zugeordnet werden, ist es zweckmäßig, wenn gemäß Anspruch 27 alle drei Verstelleinheiten auf dem Unterteil der weiteren Verstelleinheit oder einer gemeinsamen Montageplatte fixierbar sind.

Ein Ausführungsbeispiel der Erfindung ist in den Figuren dargestellt und wird in der folgenden Beschreibung näher erläutert. Von den Figuren zeigen:

Figur 1 eine Draufsicht auf das Ausführungsbeispiel,

Figur 2 in räumlicher und separater Darstellung die beiden Verstelleinheiten des Ausführungsbeispiels nach Figur 1, und

Figur 3 einen vertikalen Schnitt durch eine der beiden Verstelleinheiten längs der Schnittlinie I-I in Figur 1.

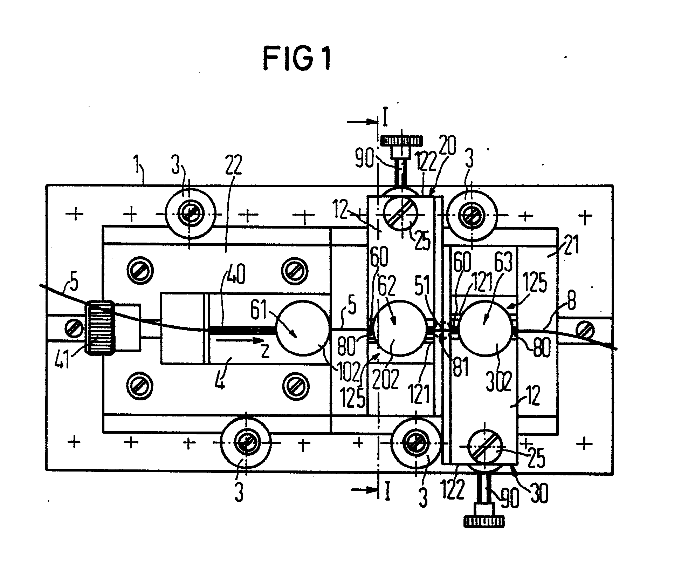

Nach Figur 1 sind auf der Montageplatte 1 zwei gleiche Unterteile 21, 22 zweier Schlittenführungen, beispielsweise zweier einfacher handelsüblicher Schiebetische mit Schwalbenschwanzführung mittels Spannpratzen 3 fest zueinander montiert. Auf dem Unterteil 21 sind anstelle des beweglichen Oberteils die beiden Verstelleinheiten 30 bzw. 20 fixiert, während das Unterteil 22 das linear bewegliche Oberteil 4 einer Schlittenführung, beispielsweise einen herkömmlichen linear verstellbaren Tisch mit Feintrieb 41 trägt, der zusammen mit dem Unterteil 22 die als Schlittenführung ausgebildete weitere Verstelleinheit 10 bildet.

Auf der Oberseite der drei Verstelleinheiten 10, 20 und 30 sind drei in einer bestimmten Mittelstellung der beiden Verstelleinheiten 20, 30 fluchtende Nuten 40 und 60 ausgebildet. Die beiden Nuten 40 und 60 der weiteren Verstelleinheit 10 und der Verstelleinheit 20 dienen zur Aufnahme des einen Faserendabschnitts 5, während die Nut 60 der Verstelleinheit 30 zur Aufnahme des anderen Faserendabschnitts 8 dient. Die Enden 51 und 81 der beiden Endabschnitte 5 bzw. 8 liegen sich in der bestimmten Mittelstellung der beiden Verstelleinheiten 20, 30 gegenüber.

Jeder Nut ist eine Magnetplatte zum Festklemmen eines eingelegten Endabschnitts 5, 8 zugeordnet, der Nut 40 die Magnetplatte 102 und den beiden Nuten 60 die Magnetplatte 202 bzw. 302. Nut und zugeordnete Magnetplatte bilden zusammen jeweils eine Faserhalterung, wobei die der weiteren Verstelleinheit 10 zugeordnete Faserhalterung mit 61, die der Verstelleinheit 20 zugeordnete andere Faserhalterung mit 62 und die der Verstelleinheit 30 zugeordnete weitere Faserhalterung mit 63 bezeichnet ist. Die Nut 40 der weiteren Faserhalterung 61 ist nicht unbedingt erforderlich und kann unter Umständen fortgelassen werden. Die Magnetplatten können aus Hartmagneten oder Weichmagneten bestehen. Die Fasern sollen durch sie nicht unter Spannung gebracht werden.

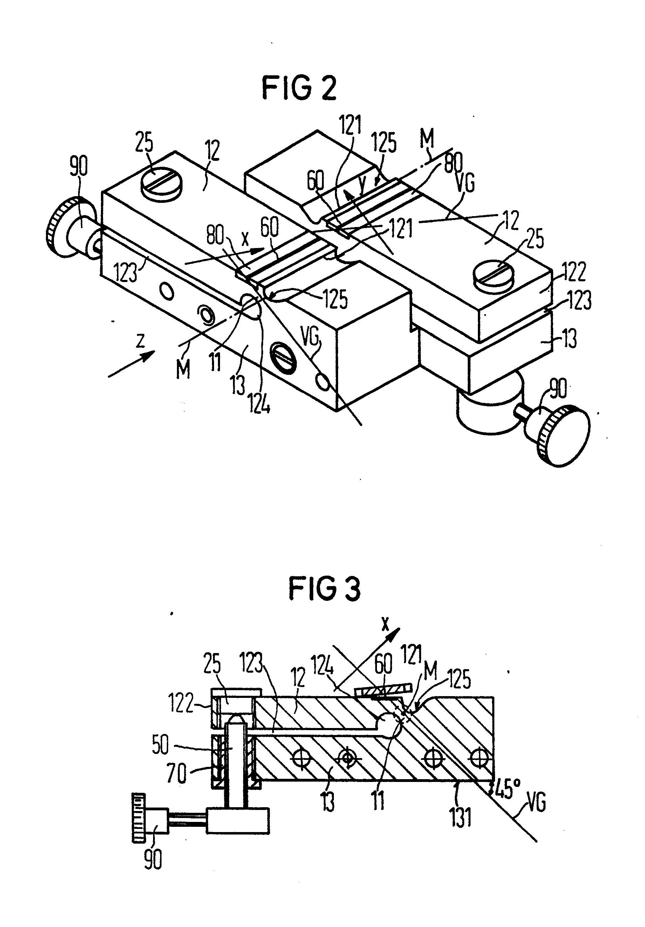

Die Verstelleinheiten 62 und 63 sind in den Figuren 2 und 3 von dem zugeordneten Unterteil 21 gelöst dargestellt. Beide Einheiten sind identisch und jeweils einstückig ausgebildet und können beispielsweise von ein und demselben Profilstab aus beispielsweise Invar abgetrennt worden sein, der das aus der Figur 3 hervorgehende Profil aufweist. Danach ist der Hebelarm 12 jeder Einheit 62 bzw. 63 durch einen Schlitz 123 vom Grundkörper 13 dieser Einheit getrennt. Der Schlitz 123 mündet in eine an die Federzone 11 grenzende Erweiterung 124. Die Federzone 11 selbst ist durch einen den Hebelarm 12 mit dem Grundkörper 13 verbindenden elastischen Steg. gebildet. Dieser Steg ist durch eine zwischen der Erweiterung 124 und einer das federzonenseitige Ende 121 des Hebelarms 12 definierenden rinnenförmigen Vertiefung 125 in der Oberfläche der betreffenden Einheit 62 bzw. 63 angeordneten Trennwand gebildet.

Die Federzone 11 definiert eine Drehachse M, um die der Hebelarm 12 verschwenkt wird, der nur um kleine Winkel im elastischen Bereich der Federzone 11 bewegt wird. Der Schlitz 123, die Erweiterung 124 und die rinnenförmige Vertiefung 125 erstrecken sich in Richtung der Drehachse M.

Der Grundkörper 13 jeder Einheit 62 bzw. 63 wird mit einer Basisfläche 131 flächig auf dem Unterteil 21 aufliegend fixiert.

Die Bewegung des Hebelarms 12 jeder Einheit 62 bzw. 63 wird durch Drehung einer vertikal zur Basisfläche 131 ausgerichteten Stellschraube 50 eingeleitet. Die Stellschraube weist ein präzises Feingewinde mit 0,5 mm Steigung auf und lagert in einer Gewindebuchse 70, die mit dem Grundkörper 13 fest verschraubt ist. Dadurch wird eine Störung des Hebels 12 durch die Handhabung der Stellschraube 50 vermieden.

Die Axialbewegung der Stellschraube 50 wird über einen Anschlag 25, der an dem von der Drehachse M fernliegenden Ende 122 des Hebelarms 12 fixiert ist und beispielsweise eine kurze Schraube sein kann, in eine kleine Winkelbewegung dieses Hebels übergeführt.

Auf jeder Einheit 62 bzw. 63 ist eine Nut mit V-förmigem Profil fixiert, die parallel zur Drehachse M verläuft, in einem Siliziumplättchen 80 eingeätzt ist und zur Aufnahme des zugeordneten Faserendabschnittes 5 bzw. 8 dient, von denen jeder mit den zugeordneten Magneten 202 bzw. 302 niedergehalten wird. Das Siliziumplättchen 80 ist auf der betreffenden Einheit 62 bzw. 63 beispielsweise mittels Zweikomponentenkleber auf dem betreffenden Hebelarm 12, beispielsweise in einer Ausnehmung dieses Armes, aufgeklebt. Es ist nahe bei dem federzonenseitigen Ende 121 des Hebelarms 12 derart angeordnet, daß in der bestimmten Mittelstellung der betreffenden Einheit 62 bzw. 63 die Verbindungsgerade VG zwischen der Längsachse des in die Nut 60 eingelegten Endabschnitts und der Drehachse M mit der Basisfläche 131 der betreffenden Einheit einen Winkel von 45° bildet. Die Bewegungsrichtung des betreffenden Endabschnitts 5 bzw. 8 erfolgt senkrecht zu dieser Geraden VG, also ebenfalls unter 45° zur Grundfläche 131. Die Bewegung erfolgt genaugenommen auf einem Kreisbogen, der jedoch bei den geringen Verstellwegen als geradlinig betrachtet werden kann. Fügt man die beiden identischen Justiereinheiten 62 und 63 so zusammen, daß die eine gegenüber der anderen um eine 180°-Drehung um eine zur Basisfläche 131 vertikale Achse verdreht ist, so kreuzen sich die Bewegungsrichtungen beider Einheiten 62 und 63 senkrecht.

Bei der Einheit 30 erfolgt dann beispielsweise die Bewegung in der x-Richtung bei der anderen in der dazu senkrechten y-Richtung, wobei beide Richtungen senkrecht zur z-Richtung sind, die der Längsrichtung der Endabschnitte 5 und 8 in den Nuten 40 und 60 entspricht. Selbstverständlich ist auch die Bewegung in der entgegengestzten Richtung möglich.

Bei einer konkreten Ausführungsform besteht die ganze Vorrichtung aus Invar-Stahl. Die Einstellgenauigkeit in der x-und y-Richtung ist gleich groß. Sie hat eine Untersetzung von etwa 0,18 μm/Winkelgrad, die durch eine Hebelschraube 90 und eine nicht dargestellte Hebeluntersetzung erzielt wird, die an der Stellschraube 50 angreift. Eingangsseitig ist der benötigte Justierweg auf ± 1/4 der Umdrehung der Stellschraube 50 begrenzt, was ausgangsseitig einen Verstellweg von ± 16 μm entspricht. Dieser Verstellweg ist normalerweise ausreichend um Exzentrizitäten des Faserkerns sowie kleine Winkelfehler der Faserbruchflächen auszugleichen. Um auch extremen Faserabweichungen gerecht zu werden, kann der Verstellbereich um ± 1/4 der Schraubenumdrehung vergrößert werden.

Zum Justieren der Faserendabschnitte 5 und 8 sollten deren Enden 51 bzw. 81 auf Güte und Sauberkeit kontrolliert werden. Die Justierung des Spleißabstandes, d.h. des in Längsrichtung der Endabschnitte 5 und 8 gemessenen Abstandes zwischen den Enden 51 und 81 erfolgt vorzugsweise unter mikroskopischer Kontrolle. Zuerst wird der eine Endabschnitt 5 in die Nuten 40 und 60 der zugeordneten Verstelleinheiten 10 und 20 eingelegt und mit den Magneten 102 bzw. 202 fixiert, wobei das Ende 51 dieses Endabschnitts 5 etwa in der Mitte zwischen den beiden Verstelleinheiten 20 und 30 angeordnet wird. Nun wird mittels des beweglichen Oberteils 4 der Faserendabschnitt bis knapp an die V-Nut der Verstelleinheit 20 zurückgezogen. Dazu ist, wie schon angedeutet, die Haltekraft der Magnetplatte 202 der Faserhalterung 62 zu vermindern, beispielsweise durch einseitiges Anheben dieser Platte 202.

Nun wird der andere Faserendabschnitt 8 in die Nut 60 der Faserhalterung 63 eingelegt und mit der zugeordneten Magnetplatte 302 fixiert. Dabei ist wieder darauf zu achten, daß das Ende 81 dieses anderen Endabschnitts 8 etwa in der Mitte zwischen den beiden Faserhalterungen 62 und 63 angeordnet ist.

Durch Verschieben der ganzen Vorrichtung in z-Richtung wird das Ende 81 in die Gesichtsfeldmitte des Mikroskops gebracht und dann fixiert. Nun kann das in z-Richtung bewegliche Ende 51 des einen Endabschnitts 5 unter leichtem Anheben der Magnetplatte 202 der Justiereinheit 20 mit dem in z-Richtung hin-und herbewegbaren Oberteil der weiteren Verstelleinheit 10 an das andere Ende 81 des anderen Endabschnitts 8 herangeführt werden und der Spleißabstand unter mikroskopischer Kontrolle genau eingestellt und fixiert werden.

Wie schon erwähnt, sind die Nuten 60 der beiden Verstelleinheiten 62 und 63 in der bestimmten Mittelstellung der Einheiten 20 und 30 fluchtend. In dieser Stellung koppelt daher ein Monomodefaserspleiß meist schon geringfügig ein, wenn die Enden 51 und 81 gut und die Exzentrizitäten des Faserkerns klein sind. Die radiale Feinjustierung des Spleißes erfolgt durch die Hebelschrauben 90 auf maximales Detektorsignal. Sie gleicht im wesentlichen eine Exzentrizität des Faserkerns und Keilfehler von Bruchflächen aus, die die Enden 51 und 81 bilden. Ein Vorjustieren der Enden 51 und 81 in x-und y-Richtung zueinander unter Mikroskopkontrolle ist deshalb nicht unbedingt erforderlich.

Für den Fall, daß in der bestimmten Mittelstellung kein Detektorsignal festzustellen ist, muß systematisch nach dem Signal gesucht werden. Durch die Begrenzung der Verstellwege in der x-und y-Richtung auf ± 1/4 der Umdrehung der Stellschraube 50 ist das Signal schnell gefunden und optimiert. Zu empfehlen ist, daß die endgültige Justierposition in Druckrichtung der Stellschraube 50 angefahren wird, um das an und für sich geringe Spiel zwischen Stellschraube 50 und der Buchse 70 zu eliminieren.

Es hat sich erwiesen, daß bei konstanter Temperatur der Koppelwirkungsgrad des Spleißes über fünf Tage höchstens ± 1,4 % Abweichung zeigte. Die thermische Dejustierung senkrecht zu den Endabschnitten betrug 0,3 μm/°C und 0,35μm/°C im Bereich von 8°C Raumtemperatur.

Die ganze Justiervorrichtung ist als Subsystem aufgebaut und kann in beliebige Meßaufbauten auf der optischen Bank oder dem optischen Tisch intergriert werden.

**Ansprüche**

1. Mechanische Vorrichtung zum Aufeinandereinjustieren der Enden (51, 81) zweier optischer Faserendabschnitte (5, 8), insbesondere von Monomodefasern, in drei Richtungen (x-, y-und z-Richtung),

mit einer Faserhalterung (62) zum Haltern eines Endabschnitts (5),

mit einer Faserhalterung (63) zum Haltern des anderen Endabschnitts (8), und

mit zwei Verstelleinheiten (20, 30), mit denen die beiden Faserhalterungen (62, 63) in zwei Richtungen (x-, y-Richtung) quer zur Längsrichtung (z-Richtung) der Endabschnitte (5, 8) relativ zueinander verstellbar sind,

**dadurch gekennzeichnet,**

-daß die beiden Verstelleinrichtungen (20, 30) gleich ausgebildet und relativ zueinander so angeordnet sind, daß ihre Verstellrichtungen (x-, y-Richtung) quer zur Längsachse (z-Richtung) und quer zueinander gerichtet sind, und

-daß zumindest eine Faserhalterung (62) so ausgebildet ist, daß der in ihr gehaltene Endabschnitt (5) in der Längsrichtung (z-Richtung) zumindest zeitweilig verschiebbar ist.

2. Vorrichtung nach Anspruch 1, **dadurch gekennzeichnet,** daß jede der beiden Verstelleinheiten (20, 30) jeweils aus einem fixierbaren Grundkörper (13) und einem daran angelenkten, durch eine Stellschraube (50) um eine in Längsrichtung (z-Richtung) der Endabschnitte (5, 8) ausgerichtete Drehachse (M) verdrehbaren Hebelarm (12) besteht, auf dem im Abstand von der Drehachse (M) die zugeordnete Faserhalterung (62 bzw. 63) angeordnet ist.

3. Vorrichtung nach Anspruch 2, **dadurch gekennzeichnet**, daß der Hebelarm (12) durch eine die Drehachse (M) definierende Federzone (11) an den Grundkörper (13) angelenkt ist.

4. Vorrichtung nach Anspruch 2 oder 3, **dadurch gekennzeichnet,** daß der Hebelarm - (12), die Federzone (11) und der Grundkörper (13) zusammen aus einem Stück bestehen.

5. Vorrichtung nach einem der Ansprüche 2 bis 4, **dadurch gekennzeichnet,** daß das eine Stück aus einem Stück Profilstab besteht, in dessen Profil der Hebelarm (12) vom Grundkörper (13) durch einen Schlitz (123) getrennt ist, der in eine an die Federzone (11) grenzende Erweiterung (124) mündet, wobei die Federzone (11) durch einen den Hebelarm (12) mit dem Grundkörper (13) verbindenden elastischen Steg gebildet ist.

6. Vorrichtung nach Anspruch 5, **dadurch gekennzeichnet,** daß der elastische Steg durch eine zwischen der Erweiterung (124) und einer das federzonenseitige Ende (121) des Hebelarms (12) definierenden rinnenförmigen Vertiefung (125) in der Oberfläche des Profilstabs angeordnete Trennwand gebildet ist.

7. Vorrichtung nach einem der Ansprüche 2 bis 6, **dadurch gekennzeichnet,** daß die Stellschraube (50) ein Feingewinde aufweist.

8. Vorrichtung nach einem der Ansprüche 2 bis 7, **dadurch gekennzeichnet,** daß die Stellschraube (50) in einer Gewindebuchse (70) gelagert ist, die mit dem Grundkörper (13) fest verschraubt ist.

9. Vorrichtung nach einem der Ansprüche 2 bis 8, **dadurch gekennzeichnet,** daß die Stellschraube (50) an dem von der Drehachse (M) fernen Ende (122) des Hebelarms (12) angreift.

10. Vorrichtung nach einem der Ansprüche 2 bis 9, **dadurch gekennzeichnet ,** daß die Stellschraube (50) an einem am Hebelarm (12) angebrachten Anschlag (25) angreift.

11. Vorrichtung nach einem der ansprüche 2 bis 10, **dadurch gekennzeichnet,** daß die Stellschraube (50) durch eine Klemmvorrichtung gegen Verdrehen gesichert ist.

12. Vorrichtung nach einem der Ansprüche 2 bis 11, **dadurch gekennzeichnet,** daß ein am Stellschraubenumfang klemmbarer Verstellhebel vorgesehen ist.

13. Vorrichtung nach einem der Ansprüche 2 bis 12, **dadurch gekennzeichnet,** daß die Stellschrauben (50) der anderen und weiteren Justiereinheit (30 bzw. 20) motorbetriebene Stellschrauben sind.

14. Vorrichtung nach einem der Ansprüche 2 bis 13, **dadurch gekennzeichnet,** daß die Federkraft der Federzone durch zumindest eine zusätzliche Feder verstärkt ist.

15. Vorrichtung nach einem der vorhergehenden Ansprüche, **dadurch gekennzeichnet,** daß eine Faserhalterung (62, 63) aus einer Nut (60) zur Aufnahme eines Faserendabschnitts (5, 8) und einer Klemmvorrichtung (202, 302) zum Festklemmen des Endabschnitts in der Nut gebildet ist.

16. Vorrichtung nach Anspruch 16, **dadurch gekennzeichnet ,**daß die Nut (60) in einem Siliziumplättchen (80) ausgebildet ist, das auf der zugeordneten Verstelleinheit (20, 30) fixiert ist.

17. Vorrichtung nach Anspruch 15 oder 16, **dadurch gekennzeichnet,**daß die Nut direkt in die Oberfläche der zugeordneten Verstelleinheit - (20, 30) eingebracht ist.

18. Vorrichtung nach einem der Ansprüche 15 bis 17, **dadurch gekennzeichnet** , daß die Klemmvorrichtung (202, 302) aus einer magnetischen Klemmvorrichtung besteht.

19. Vorrichtung nach einem der Ansprüche 15 bis 18 und einem der Ansprüche 2 bis 14, **dadurch gekennzeichnet,** daß die Drehachse (M) und die Nut (60) der beiden Verstelleinheiten (20, 30) auf einer im Winkel von 45° zu einer Basisfläche (131) des Grundkörpers (13) geneigten Geraden (VG) angeordnet sind.

20. Vorrichtung nach einem der vorhergehenden Ansprüche, **dadurch gekennzeichnet,** daß die beiden Verstelleinheiten (20, 30) starr miteinander verbunden sind.

21. Vorrichtung nach einem der vorhergehenden Ansprüche, **dadurch gekennzeichnet,** daß die beiden Verstelleinheiten (20, 30) aus einem monolithischen Block gefertigt sind.

22. Vorrichtung nach einem der vorhergehenden Ansprüche, **dadurch gekennzeichnet,** daß die beiden Verstelleinheiten (20, 30) auf einem Unterteil (21) einer Schlittenführung fixierbar sind.

23. Vorrichtung nach Anspruch 1, **dadurch gekennzeichnet,** daß eine weitere Faserhalterung (61) zum Haltern des in der einen Faserhalterung (62) gehalterten Endabschnitts (5) vorgesehen ist, die durch eine weitere Verstelleinheit (10) in Längsrichtung (z-Richtung) verstellbar ist.

24. Vorrichtung nach einem der vorhergehenden Ansprüche, **dadurch gekennzeichnet,** daß die weitere Verstelleinheit (10) zur Justierung in der Längsrichtung (z-Richtung) als eine Schlittenführung mit einem fixierten Unterteil (22) und einem linear beweglichen, mit einem Feintrieb verstellbaren Oberteil (4) ausgbildet ist, auf dem die eine Faserhalterung (61) angeordnet ist.

25. Vorrichtung nach Anspruch 22 und Anspruch 24, **dadurch gekennzeichnet,** daß das Unterteil (22) der weiteren Verstelleinheit (10) und das Unterteil (21) der beiden anderen Verstelleinheiten (20, 30) auf einer gemeinsamen Montageplatte (1) fixierbar sind.

26. Vorrichtung nach Anspruch 25, **dadurch gekennzeichnet,** daß die weitere Verstelleinheit (10) und die beiden anderen Verstelleinheiten (20, 30) auf zwei gleichen Unterteilen (22, 21) befestigbar sind.

27. Vorrichtung nach Anspruch 25, **dadurch gekennzeichnet,** daß alle drei Verstelleinheiten (10, 20, 30) auf dem Unterteil (22) der weiteren Verstelleinheit (10) oder einer gemeinsamen Montageplatte fixierbar sind.

FIG 1

# FIG 2

# FIG 3